# EUROPEAN PATENT APPLICATION

(11) **EP 3 578 328 A1**
(43) Date of publication of application: **11.12.2019**
(21) Application number: 18748614.7
(22) Date of filing: 17.01.2018
(51) Int. Cl.: B29B 7/42, B29C 43/34, B29C 43/46, B29C 47/40, B29C 47/60, B29C 47/66, B29L 7/00

(54) **SCREW-TYPE EXTRUDER**

(30) Priority: 31.01.2017 JP 2017015304
(71) Applicant: Kabushiki Kaisha Kobe Seiko Sho (Kobe Steel, Ltd.), Kobe-shi, Hyogo 651-8585 (JP)
(72) Inventor: FUKUTANI, Kazuhisa, Kobe-shi Hyogo 651-2271 (JP); HIGASHI, Kosuke, Kobe-shi Hyogo 651-2271 (JP)
(74) Representative: TBK
(86) International application number: PCT/JP2018/001194
(87) International publication number: WO 2018/142936

(57) **Abstract**

Provided is a screw-type extruder having a configuration capable of enhancing the degree to which materials are dispersed/mixed. A screw-type extruder (1) comprises screws (2, 3), and a casing (4) in which a material charging port (11) is provided to the upstream side, said casing (4) accommodating the screws (2, 3). Regarding the clearance between a top part (12) of a flight part (7) and the inner wall surface of the casing (4), a clearance (C2) of the screws (2, 3) on the downstream-side end of the flight part (7) is greater than a clearance (C1) at the downstream-side end (11a) of the charging port (11). The area between the downstream-side end (11a) of the charging port (11) and the downstream-side end of the flight part (7) has no region in which the clearance decreases from the upstream side toward the downstream side.

## Description

### TECHNICAL FIELD

The present invention relates to a screw extruder for extruding a kneaded material, and more particularly, relates to a screw extruder suitably used for forming a kneaded material into a sheet shape while extruding it.

### BACKGROUND ART

In a process for manufacturing automobile tires, an extrusion forming machine is used and the extrusion forming machine is placed below a kneader for rubber as the raw material of the tires and forms the rubber (kneaded material) fed from the kneader into a sheet shape while continuously extruding it. Examples of techniques related to the extrusion forming machine of this kind include the one described in Patent Literature 1 described below.

A sheet forming apparatus described in Patent Literature 1 has a material supply portion that supplies a material through extrusion, a material storage portion that temporarily stores the material supplied through extrusion, a material pressing portion that applies a pressing force to the stored material, a material rolling portion that forms the stored material into a sheet shape and sweep it off, and a control portion that controls the operation. The material supply portion has a biaxial taper screw, and the biaxial taper screw is housed in a casing.

According to FIG. 7 and the like of Patent Literature 1, the clearance (gap dimension) between the top portion of the helical flight portion of the taper screw and the inner wall surface of the casing is fixed from the upstream side to the downstream side.

### CITATION LIST

### PATENT LITERATURE

Patent Literature 1: JP-A-2011-73428

### SUMMARY OF INVENTION

### TECHNICAL PROBLEM

In recent years, there have been increasing demands for fuel-efficient tires. In rubber as the raw material of fuel-efficient tires, silica is frequently compounded at a high ratio. There is a problem in that the rubber (kneaded material) having silica compounded at a high ratio is difficult to form into a sheet shape in the extrusion forming machine. For this reason, it is desired to enhance the dispersion mixing property of the rubber (kneaded material) not only in the kneader of the upstream side process but also in the extrusion forming machine.

However, in the sheet forming apparatus described in Patent Literature 1, since the clearance (gap dimension) between the top portion of the helical flight portion of the taper screw and the inner wall surface of the casing is fixed from the upstream side to the downstream side as described above, the material is not particularly kneaded in the material supply portion. That is, in the sheet forming apparatus described in Patent Literature 1, the dispersion mixing property of the material cannot be enhanced.

The present invention is made in view of the above-described circumstances, and an object thereof is to provide a screw extruder having a structure capable of enhancing the dispersion mixing property of the material.

### SOLUTION TO PROBLEM

A screw extruder according to the present invention is a screw extruder for extruding a kneaded material, including: a screw; and a casing housing the screw and having a material supply port on the upstream side. The screw has a shaft portion and a helical flight portion provided on the outer peripheral surface of the shaft portion. Regarding a clearance between a top portion of the flight portion and an inner wall surface of the casing, the clearance at a downstream side end of the flight portion is larger than the clearance at a downstream side end of the supply port, and no area where the clearance decreases from the upstream side toward the downstream side is present between the downstream side end of the supply port and the downstream side end of the flight portion.

With this structure, the material can be not only sent but also kneaded on the downstream side between the downstream side end of the material supply port and the downstream side end of the flight portion of the screw. That is, with the screw extruder according to the present invention, the dispersion mixing property of the material can be enhanced.

In the present invention, preferably, an area where the clearance is fixed is present in at least either of an upstream part and a downstream part between the downstream side end of the supply port and the downstream side end of the flight portion.

The above-mentioned upstream part is a part where a material sending function is achieved, and the above-mentioned downstream part is a part where a kneading function of kneading the material is achieved. With this structure, the material sending function and/or the kneading function can be stabilized. In addition, the manufacture of the flight portion of the screw or the manufacture of the casing is easier than the case where the clearance continuously changes over the entire length between the downstream side end of the material supply port and the downstream side end of the flight portion of the screw.

Moreover, in the present invention, preferably, an area where the clearance is fixed is present in each of the upstream part and the downstream part between the downstream side end of the supply port and the downstream side end of the flight portion.

With this structure, both the material sending function and the kneading function can be stabilized. In addition, the manufacture of the flight portion of the screw or the manufacture of the casing is easier.

Further, in the present invention, preferably, a clearance step portion where the clearance stepwisely enlarges from the upstream side toward the downstream side is present between the downstream side end of the supply port and the downstream side end of the flight portion and the clearance on each of the upstream side and the downstream side of the clearance step portion is fixed.

With this structure, the manufacture of the flight portion of the screw or the manufacture of the casing is easier than the case where the clearance continuously changes.

Further, in the present invention, preferably, a clearance enlarged portion where the clearance linearly enlarges from the upstream side toward the downstream side is present between the downstream side end of the supply port and the downstream side end of the flight portion and the clearance on each of the upstream side and the downstream side of the clearance enlarged portion is fixed.

With this structure, the accumulation of the material in the position where the clearance changes can be prevented.

Further, in the present invention, preferably, when a distance between the downstream side end of the flight portion and the downstream side end of the supply port in the axial direction of the shaft portion is L and a distance between the downstream side end of the flight portion and the clearance step portion is Lm, 0.25<Lm/L is satisfied.

With this structure, the amount of material passing through the clearance portion increases, so that uniform kneading of the material can be promoted.

In the above-described invention, preferably, 0.25<Lm/L<0.4 is satisfied.

With this structure, uniform kneading of the material can be promoted by increasing the amount of material passing through the clearance portion while maintaining the pressure boosting property (sending property) high.

Further, in the present invention, preferably, when the distance between the downstream side end of the flight portion and the downstream side end of the supply port in the axial direction of the shaft portion is L and the distance between the downstream side end of the flight portion and the center position of the clearance enlarged portion in the axial direction is Lm, 0.25<Lm/L is satisfied.

With this structure, the amount of material passing through the clearance portion increases, so that uniform kneading of the material can be promoted.

In the above-described embodiment, preferably, 0.25<Lm/L≤0.4 is satisfied.

With this structure, uniform kneading of the material can be promoted by increasing the amount of material passing through the clearance portion while maintaining the pressure boosting property (sending property) high.

Further, in the present invention, preferably, the clearance is changed depending on an outside diameter of the top portion of the flight portion.

With this structure, the accumulation of the material in the clearance changed part can be prevented more surely than the case where the clearance is changed by the shape and dimensions of the casing. In addition, the manufacture of the screw extruder is easier in the case where the clearance is changed depending on the outside diameter of the top portion of the flight portion.

Further, in the present invention, preferably, the screw extruder includes a pressure sensor configured to measure a pressure inside the casing in the area where the clearance on the downstream side between the downstream side end of the supply port and the downstream side end of the flight portion is fixed, and a rotational speed of the screw is controlled depending on the pressure measured by the pressure sensor.

With this structure, the kneading of the material can be easily controlled.

### ADVANTAGEOUS EFFECTS OF INVENTION

With the screw extruder according to the present invention, the dispersion mixing property of the supplied material can be enhanced in the screw extruder.

### BRIEF DESCRIPTION OF DRAWINGS

[FIG. 1] FIG. 1 is a horizontal cross-sectional view of an extruder with a roller die as an embodiment of the screw extruder according to the present invention.
[FIG. 2] FIG. 2 is a cross-sectional view taken on A-A of FIG. 1 and a longitudinal cross-sectional view of the extruder with a roller die according to the embodiment of the present invention.
[FIG. 3] FIG. 3 is a view schematically showing a change, in the screw shaft direction, of the clearance between a top portion of a flight portion and the inner wall surface of a casing in the extruder with a roller die shown in FIG. 1 and FIG. 2.
[FIG. 4] FIG. 4 is a graph showing results when the relationship between the mixing portion ratio of the flight portion (the ratio between large and small clearances) and the amount of leakage, in an opposite direction, of the material in the clearance portion in the extruder with a roller die shown in FIG. 1 and FIG. 2 was examined by a flow analysis.
[FIG. 5] FIG. 5 is a graph showing results when the relationship between the mixing portion ratio of the flight portion (the ratio between large and small clearances) and the pressure boosting property in the extruder with a roller die shown in FIG. 1 and FIG. 2 was examined by the flow analysis.
[FIG. 6] FIG. 6 is a view corresponding to FIG. 3 and shows a second embodiment of the clearance between the top portion of the flight portion and the inner wall surface of the casing.
[FIG. 7] FIG. 7 is a view corresponding to FIG. 3 and shows a first modification of the clearance between the top portion of the flight portion and the inner wall surface of the casing.
[FIG. 8] FIG. 8 is a view corresponding to FIG. 3 and shows a second modification of the clearance between the top portion of the flight portion and the inner wall surface of the casing.
[FIG. 9] FIG. 9 is a view corresponding to FIG. 3 and shows a third modification of the clearance between the top portion of the flight portion and the inner wall surface of the casing.

### DESCRIPTION OF EMBODIMENTS

Hereinafter, embodiments for carrying out the present invention will be described with reference to the drawings. A screw extruder shown in the following embodiments is a screw extruder with a roller die (hereinafter, referred to as "roller-die-equipped extruder") that extrudes a kneaded material of a high-polymer material such as rubber into a sheet shape. The screw extruder according to the present invention may also be used for a machine called a pelletizer that extrudes a kneaded material of a high-polymer material from a die having a number of circular holes and then cuts it into cylindrical pellets.

### (First embodiment)

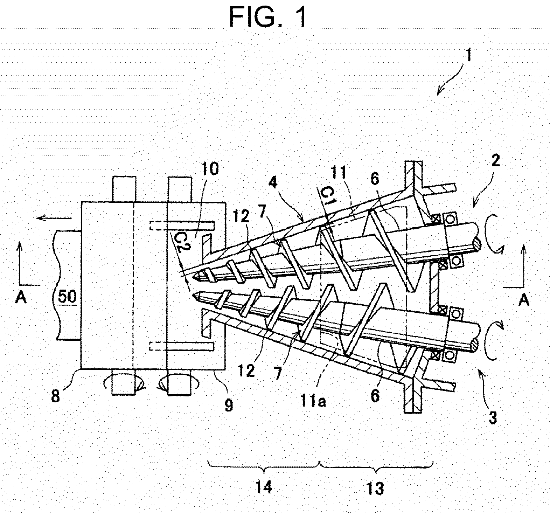

A roller-die-equipped extruder 1 according to an embodiment of the present invention will be described with reference to FIG. 1 to FIG. 3. The roller-die-equipped extruder 1 has a pair of left and right screws 2 and 3 that extrude a kneaded material and a casing 4 housing the screws 2 and 3. In front of the casing 4, a pair of upper and lower rollers 8 and 9 are disposed. A part between the casing 4 and the rollers 8 and 9 is called a bank portion 10, and the kneaded material extruded by the screws 2 and 3 accumulates in this bank portion 10. The rollers 8 and 9 are coupled so as to rotate in directions opposite to each other, and are rotated at the same rotational speed by a non-illustrated single driving means. The rollers 8 and 9 are for rolling the kneaded material to form it into a sheet shape (sheet 50), and are called a roller-die.

The screws 2 and 3 each have a shaft portion 6 and a helical flight portion 7 provided on the outer peripheral surface of the shaft portion 6. The screw 2 and the screw 3 are screws having the same shape and dimensions except that the torsion angles of the flights are opposite to each other. Moreover, the screws 2 and 3 are coupled so as to rotate in directions opposite to each other, and are rotated at the same rotational speed by a non-illustrated single driving means.

The casing 4 is tapered in shape, and has a casing upstream portion 13 having a material (kneaded material) supply port 11 provided at the top thereof, and a casing downstream portion 14 having its periphery surrounded by a wall surface. The kneaded material such as rubber supplied to the supply port 11 from thereabove is extruded into the bank portion 10 by the screws 2 and 3 rotating in directions opposite to each other, and then, is formed into a sheet shape by passing between the rollers 8 and 9.

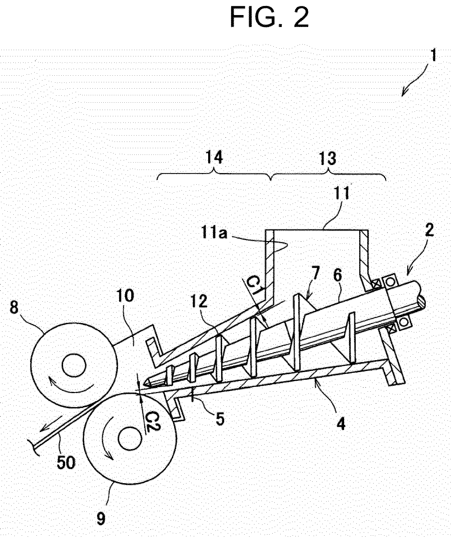

As shown in FIG. 2, a pressure sensor 5 is attached to the bottom portion of the casing downstream portion 14 having its periphery surrounded by the wall surface. By the pressure sensor 5, the pressure (the pressure of the kneaded material) inside the casing downstream portion 14 is measured. To prevent contact with the flight portions 7 of the rotating screws 2 and 3, the pressure sensor 5 is attached so that the tip portion (pressure detection portion) thereof does not protrude from the inner wall surface of the casing 4.

Here, in the present invention, in order to enhance the dispersion mixing property of the material in the roller-die-equipped extruder 1 itself, the clearance (gap) between a top portion 12 of the flight portion 7 and the inner wall surface of the casing 4 is set so that a clearance C2 at the downstream side end of the flight portion 7 is larger than a clearance C1 at a downstream side end 11a of the supply port 11 and that no area where the clearance decreases from the upstream side toward the downstream side is present between the downstream side end 11a of the supply port 11 and the downstream side end of the flight portion 7.

Thereby, the material can be not only sent (increased in pressure) but also kneaded on the downstream side between the downstream side end 11a of the material supply port 11 and the downstream side end of the flight portions 7 of the screws 2 and 3.

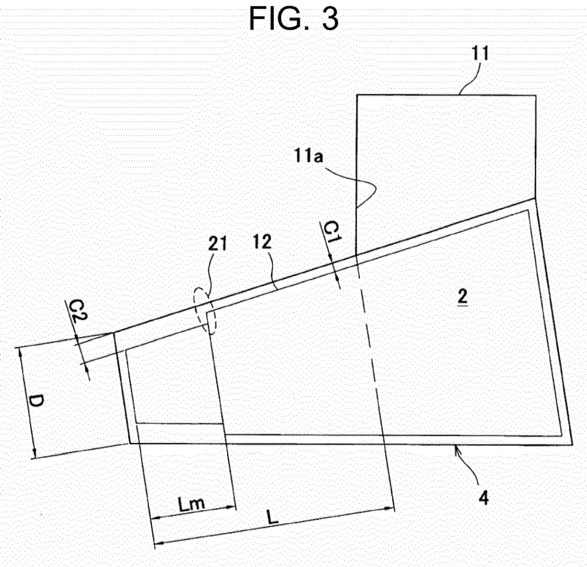

In the embodiment shown in FIG. 1 to FIG. 3, a clearance step portion 21 where the clearance stepwisely enlarges from the upstream side toward the downstream side is provided between the downstream side end 11a of the supply port 11 and the downstream side end of the flight portion 7 (see FIG. 3). With this clearance step portion 21 as the boundary, the clearance on the upstream side of the clearance step portion 21 is fixed to C1, whereas the clearance on the downstream side of the clearance step portion 21 is fixed to C2 (C2>C1).

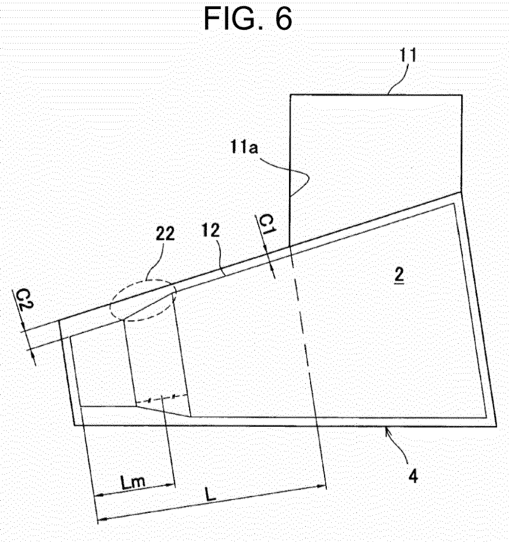

The flight portion 7 is helical as mentioned above. For this reason, the clearance between the top portion 12 of the flight portion 7 and the inner wall surface of the casing 4 is also helical. FIG. 3 is a view schematically showing the change of this clearance in the direction of the screw shaft, and does not show the form of the clearance when the screws 2 and 3 and the casing 4 are viewed cross-sectionally (this also applies to FIG. 6 to FIG. 9). The form of the clearance when the screws 2 and 3 and the casing 4 are viewed cross-sectionally is as shown in FIG. 1 and FIG. 2.

In the present embodiment, the above-described clearance is changed by changing the outside diameter of the top portion 12 of the flight portion 7. The inner wall surface of the casing 4 facing the top portion 12 of the flight portion 7 is linear when viewed cross-sectionally. At the clearance step portion 21, the outside diameter of the top portion 12 of the flight portion 7 is stepwisely changed by the difference between the clearance C2 and the clearance C1.

By changing the clearance between the top portion 12 of the flight portion 7 and the inner wall surface of the casing 4 by changing the outside diameter of the top portion 12, the manufacture of the extruder is easier than the case where the clearance is changed by the shape and dimensions of the casing 4. In addition, the accumulation of the material in the clearance changed part can be prevented.

Moreover, the above-described pressure sensor 5 measures the pressure inside the casing 4 in the area where the clearance on the downstream side between the downstream side end 11a of the supply port 11 and the downstream side end of the flight portion 7 is fixed to C2, and the roller-die-equipped extruder 1 is controlled and structured so that the rotational speed of the screws 2 and 3 are controlled according to the pressure (the pressure of the kneaded material) measured by the pressure sensor 5. For example, when the pressure measured by the pressure sensor 5 is lower than a predetermined pressure (Pmin), the rotational speed of the screws 2 and 3 is increased, and when it is higher than a predetermined pressure (Pmax), the rotational speed of the screws 2 and 3 is reduced. When the pressure is between Pmax and Pmin, the rotational speed of the screws 2 and 3 at that point of time is maintained as it is. By measuring the pressure on the downstream side inside the casing 4 in the area where the clearance is fixed to C2 (C2>C1) and controlling the rotational speed of the screws 2 and 3 depending on the measured pressure, the kneading of the material can be easily controlled.

When the distance between the downstream side end of the flight portion 7 and the downstream side end 11a of the supply port 11 in the axial direction of the screws 2 and 3 (shaft portion 6) is L and the distance between the downstream side end of the flight portion 7 and the clearance step portion 21 is Lm, if Lm/L is large, the area where the clearance is large is large, and the amount of material leakage in this part increases in a direction opposite to the material extrusion direction. If the amount of material leakage increases in the direction opposite to the material extrusion direction, the distributive mixing of the material is promoted. That is, the area where the clearance is C2 (in the axial direction, the area of the length Lm) is an area where the mixing (distributive mixing) of the material is promoted. On the other hand, if the amount of material leakage increases in the direction opposite to the material extrusion direction, the material pressure boosting property decreases. The area where the clearance is C1 (C1<C2) is an area where material extrusion (pressure boosting) is performed.

The present inventors examined the relationship between Lm/L and the material leakage amount and the relationship between Lm/L and the pressure boosting property by a flow analysis. The analysis conditions and the results thereof are shown in Table 1.

**[Table 1]**

| | Analysis condition | | Analysis result | |
|---|---|---|---|---|
| | C/D | Lm/L | Q/Q0 | ΔP/ΔP0 |
| Condition 0 (Reference) | 0.020 | 0.00 | 1.00 | 1.00 |
| Condition 1A | 0.039 | 0.25 | 1.02 | 0.73 |
| Condition 1B | 0.039 | 0.50 | 1.22 | 1.30 |
| Condition 1C | 0.039 | 0.75 | 1.63 | 2.06 |
| Condition 2A | 0.059 | 0.25 | 1.00 | 0.28 |
| Condition 2B | 0.059 | 0.50 | 1.38 | 1.22 |
| Condition 2C | 0.059 | 0.75 | 2.11 | 2.50 |

In Table 1, C is the clearance at the downstream side end of the flight portion 7, and D is the inside diameter of the tip portion of the casing 4 (see FIG. 3). Regarding conditions 1A to 1C and 2A to 2C, C in Table 1 is C2 in FIG. 3. Moreover, Q is the amount (flow amount) of material leakage in the clearance portion in the direction opposite to the extrusion direction. ΔP is the difference (pressure difference) between the pressure in the casing 4 at the downstream side end 11a of the supply port 11 and the pressure in the casing 4 at the tip portion of the casing 4. Moreover, condition 0 is the condition of the reference where the clearance from the upstream side to the downstream side of the casing 4 is always fixed to C (=C1 (C1<C2)). Q0 is the amount (flow amount) of the material leakage in the clearance portion under condition 0, and ΔP0 is the above-mentioned pressure difference under condition 0.

Q/Q0 indicates that the higher its value is, the higher the dispersion mixing property of the material is. On the contrary, ΔP/ΔP0 indicates that the lower its value is, the higher the pressure boosting property is. ΔP (pressure difference) being small means that the resistance is low. Sending the same amount of material is the common analysis condition, and the pressure boosting property is higher when the same amount of material can be sent with low resistance. That is, ΔP/ΔP0 indicates that the lower its value is, the higher the pressure boosting property is.

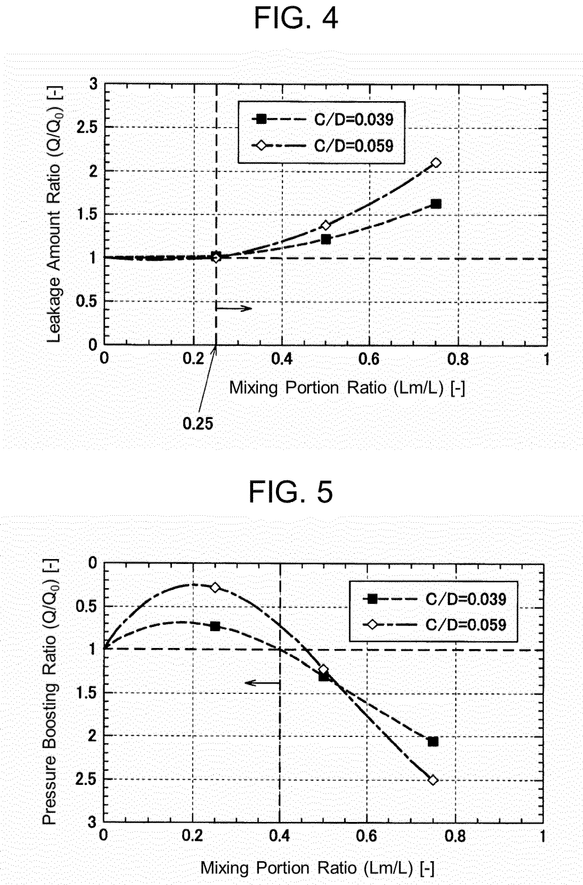

The graphs shown in FIG. 4 and FIG. 5 are the analysis results shown in Table 1 which are graphed. As is apparent from FIG. 4, with 0.25<Lm/L, the dispersion mixing property of the material is enhanced, so that uniform kneading of the material can be promoted. Moreover, as is apparent from FIG. 5, with Lm/L≤0.4, the pressure boosting property can be maintained high. Moreover, from FIG. 4 and FIG. 5, with 0.25<Lm/L≤0.4, uniform kneading of the material can be promoted while the pressure boosting property is maintained high.

### (Second embodiment)

FIG. 6 is a view corresponding to FIG. 3 and shows a second embodiment of the clearance between the top portion 12 of the flight portion 7 and the inner wall surface of the casing 4.

In the present embodiment, a clearance enlarged portion 22 where the clearance linearly enlarges from the upstream side toward the downstream side is provided between the downstream side end 11a of the supply port 11 and the downstream side end of the flight portion 7 (see FIG. 3). With this clearance enlarged portion 22 as the boundary, the clearance on the upstream side of the clearance enlarged portion 22 is fixed to C1, and the clearance on the downstream side of the clearance enlarged portion 22 is fixed to C2 (C2>C1).

With this structure, the accumulation of the material in the part where the clearance changes can be prevented more surely than the case where the part where the clearance changes is the above-described clearance step portion 21.

In the present embodiment, as in the case of the first embodiment shown in FIG. 3, Lm/L is preferably set so that 0.25<Lm/L is satisfied, and further, it is preferably set so that 0.25< Lm/L≤0.4 is satisfied. Here, Lm is defined as the distance between the downstream side end of the flight portion 7 and the center position of the clearance enlarged portion 22 in the axial direction (see FIG. 6).

### (Modifications)

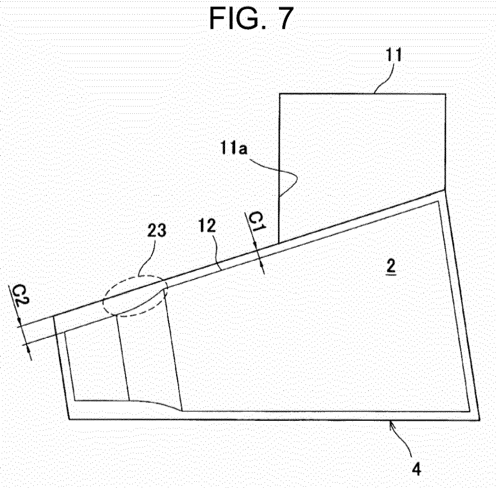

FIG. 7 is a view corresponding to FIG. 3 and shows a first modification of the clearance between the top portion 12 of the flight portion 7 and the inner wall surface of the casing 4.

In the embodiment shown in FIG. 6, the clearance enlarged portion 22 is such that the clearance linearly enlarges from the upstream side toward the downstream side. Instead of this, the clearance enlarged portion may be such that the clearance enlarges with the clearance change rate being decreased from the upstream side toward the downstream side like a clearance enlarged portion 23 shown in FIG. 7.

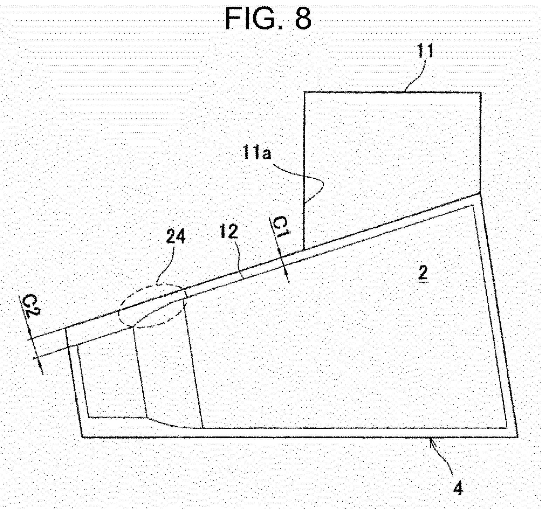

Moreover, the clearance enlarged portion may be such that the clearance enlarges with the clearance change rate being increased from the upstream side toward the downstream side like a clearance enlarged portion 24 shown in FIG. 8.

In each of the above-described embodiments and modifications, an area where the clearance is fixed is present in each of the upstream part and the downstream part between the downstream side end 11a of the supply port 11 and the downstream side end of the flight portion 7. The area where the clearance is fixed may be present in only either one of the upstream part and the downstream part, between the downstream side end 11a of the supply port 11 and the downstream side end of the flight portion 7.

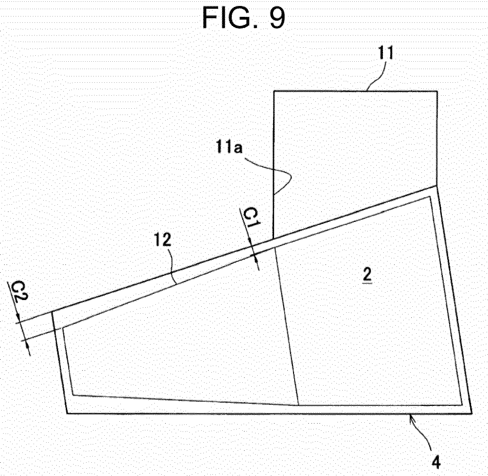

In each of the above-described embodiments and modifications, an area where the clearance is fixed is present between the downstream side end 11a of the supply port 11 and the downstream side end of the flight portion 7. In a third modification shown in FIG. 9, no area where the clearance is fixed is present between the downstream side end 11a of the supply port 11 and the downstream side end of the flight portion 7, and the clearance linearly enlarges from the upstream side toward the downstream side from the downstream side end 11a of the supply port 11 to the downstream side end of the flight portion 7. The clearance may enlarge with the clearance change rate being decreased from the upstream side toward the downstream side from the downstream side end 11a of the supply port 11 to the downstream side end of the flight portion 7, or the clearance may enlarge with the clearance change rate being increased from the upstream side toward the downstream side.

In the above-described embodiments and modifications, the clearance between the top portion 12 of the flight portion 7 and the inner wall surface of the casing 4 is changed by changing the outside diameter of the top portion 12. Instead of this, the clearance may be changed by the shape and dimensions of the casing 4.

The above-described pair of left and right screws 2 and 3 are structured so as to be rotated at the same rotational speed by a single driving means. Instead of this, the pair of left and right screws 2 and 3 may be structured so as to be rotated independently of each other by two driving means.

The pressure sensor 5 configured to measure the pressure inside the casing 4 (casing downstream portion 14) may be attached not to the bottom portion of the casing 4 (casing downstream portion 14) but to a side portion or a top portion of the casing 4 (casing downstream portion 14).

The screw extruder may be a screw extruder having not the pair of left and right screws 2 and 3 but only one screw.

In addition, various modifications may be made within the scope that one of ordinary skill in the art can arrive at.

The present application is based on Japanese Patent Application (No. 2017-015304) filed on January 31, 2017, the entire subject matter of which is incorporated herein by reference.

### REFERENCE SIGNS LIST

1: Roller-die-equipped extruder (screw extruder)
2, 3: Screw
4: Casing
5: Pressure sensor
6: Shaft portion
7: Flight portion
8, 9: Roller
11: Supply port
11a: Downstream side end
12: Top portion
21: Clearance step portion
22: Clearance enlarged portion
C1, C2: Clearance

## Claims

1. A screw extruder for extruding a kneaded material, comprising:
a screw; and
a casing housing the screw and having a material supply port on an upstream side, wherein:
the screw has a shaft portion and a helical flight portion provided on an outer peripheral surface of the shaft portion;
regarding a clearance between a top portion of the flight portion and an inner wall surface of the casing, the clearance at a downstream side end of the flight portion is larger than the clearance at a downstream side end of the supply port; and
no area where the clearance decreases from the upstream side toward the downstream side is present between the downstream side end of the supply port and the downstream side end of the flight portion.

2. The screw extruder according to claim 1,
wherein an area where the clearance is fixed is present in at least one of an upstream part and a downstream part between the downstream side end of the supply port and the downstream side end of the flight portion.

3. The screw extruder according to claim 2,
wherein an area where the clearance is fixed is present in each of the upstream part and the downstream part between the downstream side end of the supply port and the downstream side end of the flight portion.

4. The screw extruder according to any one of claims 1 to 3, wherein:
a clearance step portion where the clearance stepwisely enlarges from the upstream side toward the downstream side is present between the downstream side end of the supply port and the downstream side end of the flight portion; and
the clearance on each of the upstream side and the downstream side of the clearance step portion is fixed.

5. The screw extruder according to any one of claims 1 to 3, wherein:
a clearance enlarged portion where the clearance linearly enlarges from the upstream side toward the downstream side is present between the downstream side end of the supply port and the downstream side end of the flight portion; and
the clearance on each of the upstream side and the downstream side of the clearance enlarged portion is fixed.

6. The screw extruder according to claim 4,
wherein when a distance between the downstream side end of the flight portion and the downstream side end of the supply port in the axial direction of the shaft portion is L and a distance between the downstream side end of the flight portion and the clearance step portion is Lm, 0.25<Lm/L is satisfied.

7. The screw extruder according to claim 6, wherein 0.25<Lm/L≤0.4 is satisfied.

8. The screw extruder according to claim 5,
wherein when a distance between the downstream side end of the flight portion and the downstream side end of the supply port in the axial direction of the shaft portion is L and a distance between the downstream side end of the flight portion and the center position of the clearance enlarged portion in the axial direction is Lm, 0.25<Lm/L is satisfied.

9. The screw extruder according to claim 8, wherein 0.25<Lm/L≤0.4 is satisfied.

10. The screw extruder according to any one of claims 1 to 3,
wherein the clearance is changed depending on an outside diameter of the top portion of the flight portion.

11. The screw extruder according to any one of claims 1 to 3, comprising a pressure sensor configured to measure a pressure inside the casing in an area where the clearance on the downstream side between the downstream side end of the supply port and the downstream side end of the flight portion is fixed,
wherein a rotational speed of the screw is controlled depending on the pressure measured by the pressure sensor.
